# FASCICULE DE BREVET EUROPEEN

(11) **EP 3 927 570 B1**
(45) Date de publication et mention de la délivrance du brevet: **16.04.2025**
(21) Numéro de dépôt: 20702687.3
(22) Date de dépôt: 07.02.2020
(51) Int. Cl.: B60K 1/04, B62D 21/00

(54) **DISPOSITIF DE PROTECTION D'UN ORGANE AUTOMOBILE MONTÉ SOUS CAISSE**
SCHUTZVORRICHTUNG FÜR EIN UNTERHALB EINER KAROSSERIE ANGEORDNETES KRAFTFAHRZEUGBAUTEIL
PROTECTIVE DEVICE FOR A MOTOR VEHICLE MEMBER MOUNTED BELOW A BODY SHELL

(30) Priorité: 22.02.2019 FR 1901839
(43) Date de publication de la demande: 29.12.2021
(73) Titulaire: Renault s.a.s, 92100 Boulogne Billancourt (FR)
(72) Inventeur: BATAILLE, Luc, 78460 Choisel (FR); FLAQUIERE, Damien, 78220 VIROFLAY (FR)
(74) Mandataire: Renault Group
(86) Numéro de dépôt international: PCT/EP2020/053180
(87) Numéro de publication internationale: WO 2020/169371

(56) Documents cités:
- DE-A1- 102010 033 123
- JP-A- 2017 196 952
- US-A1- 2017 305 248
- US-A1- 2018 236 863

## Description

L'invention concerne un dispositif de protection d'un organe automobile monté sous caisse, notamment un dispositif de protection d'un batterie électrique montée sous la caisse d'un véhicule dit électrique. L'invention porte encore sur un véhicule automobile comprenant un tel dispositif de protection.

Un véhicule dit électrique est équipé d'un moteur électrique et d'une batterie comprenant une réserve d'énergie permettant d'entraîner le moteur électrique afin de faire avancer le véhicule. Une telle batterie est généralement volumineuse et le choix de son emplacement au sein du véhicule peut donc s'avérer complexe. Parmi les emplacements possibles, la batterie peut s'étendre au niveau du plancher du véhicule et être fixée sous la caisse du véhicule. Un tel emplacement permet un montage et un démontage aisé de la batterie mais expose la batterie à des risques de choc ou d'endommagement lorsque le véhicule est utilisé.

Afin d'éviter que la batterie n'entre en collision avec un obstacle lors de l'utilisation du véhicule, on connaît grâce à la publication N°FR2950852A1, l'utilisation d'un dispositif de protection fixé à l'arrière du châssis de sorte à former un point bas du véhicule qui serait heurté en premier en cas de collision avec un obstacle lors d'une marche arrière. Ce dispositif comprend une rampe inclinée qui permet de soulever le véhicule en prenant appui sur l'obstacle en question.

Toutefois, cette solution présente des inconvénients. En particulier, le dispositif selon FR2950852A1 a pour inconvénient de ne pas protéger contre les chocs latéraux qui peuvent survenir par exemple lors de manœuvres du véhicule. De tels chocs peuvent survenir particulièrement fréquemment avec des véhicules utilitaires puisque ceux-ci-sont contraints à effectuer de nombreuses manœuvres, rapidement, et parfois dans des espaces exigus et comprenant divers obstacles. Ainsi, la protection de la batterie est insuffisante pour ces véhicules. Sa détérioration peut créer un risque pour la sécurité des utilisateurs du véhicule et son remplacement est particulièrement onéreux.

US2017/305248 divulgue un autre dispositif de protection d'un organe automobile monté sous caisse

Le but de l'invention est de fournir un dispositif de protection remédiant aux inconvénients ci-dessus et améliorant les dispositifs de protections connus de l'art antérieur.

Plus précisément, un premier objet de l'invention est un dispositif de protection apte à protéger un organe d'un véhicule contre des chocs latéraux.

Un second objet de l'invention est un dispositif de protection facile à fabriquer et à remplacer.

L'invention se rapporte à un dispositif de protection pour protéger un organe monté saillant sous une caisse d'un véhicule automobile, notamment pour protéger une batterie de traction montée saillante sous une caisse d'un véhicule électrique, le dispositif de protection s'étendant le long d'un axe destiné à être orienté longitudinalement par rapport au véhicule et le long d'un côté dudit organe, le dispositif de protection étant destiné à être fixé à une caisse du véhicule de sorte qu'un point bas du dispositif de protection soit plus bas qu'un point bas dudit organe, le dispositif de protection comprenant une partie incluant le point bas du dispositif de protection, ladite partie comprenant sensiblement une forme d'arc de cercle selon une section perpendiculaire audit axe du dispositif de protection.

Le dispositif de protection peut être apte à se déformer consécutivement à un choc contre un obstacle.

Le dispositif de protection peut comprendre une série d'ouvertures réparties le long de l'axe.

La série d'ouvertures peut comprendre une alternances de premières ouvertures et de deuxièmes ouvertures, les premières ouvertures comprenant une surface strictement supérieure à la surface des deuxièmes ouvertures, notamment le rapport de la surface des premières ouvertures sur la surface des deuxièmes ouvertures étant compris entre 1.1 et 1.5.

Les ouvertures peuvent être réalisées dans des renfoncements vers l'intérieur du dispositif de protection.

Le dispositif de protection peut comprendre un profil en forme de V.

Le dispositif de protection peut comprendre une série de trous de fixation aptes à coopérer avec des moyens de fixation pour la fixation du dispositif de protection à la caisse du véhicule, les trous de fixation étant agencés de sorte que les moyens de fixation demeurent directement accessibles lorsque le dispositif de protection est fixé à la caisse du véhicule.

Le dispositif de protection peut comprendre :
- une première bride de fixation munie d'au moins un trou de fixation, la première bride de fixation s'étendant dans un premier plan,
- une deuxième bride de fixation munie d'au moins un trou de fixation, la deuxième bride de fixation s'étendant dans un deuxième plan,
- une troisième bride de fixation munie d'au moins un trou de fixation, la troisième bride de fixation s'étendant dans un troisième plan,
le premier plan, le deuxième plan et le troisième plan étant sensiblement perpendiculaires entre eux.

Le dispositif de protection peut être destiné à être fixé à un élément de caisse longitudinal du véhicule, notamment à un longeron de la caisse du véhicule.

L'invention se rapporte également à un système de protection pour protéger un organe fixé sous une caisse d'un véhicule automobile, le système de protection comprenant un dispositif de protection tel que défini précédemment et au moins un dispositif d'absorption de l'énergie d'un choc, l'au moins un dispositif d'absorption étant agencé entre le dispositif de protection et un élément de caisse longitudinal du véhicule, notamment un longeron de la caisse du véhicule, pour absorber l'énergie de chocs transversaux contre le dispositif de protection.

L'invention se rapporte également à un véhicule automobile électrique, notamment de type utilitaire, le véhicule comprenant une caisse, une batterie de traction montée saillante sous la caisse, et au moins un dispositif de protection tel que défini précédemment et/ou un système de protection tel que défini précédemment, le dispositif de protection étant fixé le long d'un côté longitudinal de la batterie de traction, notamment le véhicule comprenant deux dispositifs de protection tel que défini précédemment et/ou deux systèmes de protection tel que défini précédemment, les deux dispositifs de protection étant fixés latéralement de part et d'autre de la batterie de traction.

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue partielle de côté d'un véhicule automobile équipé d'un dispositif de protection selon un mode de réalisation de l'invention.
[Fig. 2] La figure 2 représente le véhicule de la figure 1 sans son dispositif de protection.
[Fig. 3] La figure 3 est une vue en perspective de dessous du véhicule.
[Fig. 4] La figure 4 est une première vue en perspective de dessus d'une batterie de traction du véhicule et du dispositif de protection.
[Fig. 5] La figure 5 est une première vue en perspective de dessus d'une batterie de traction du véhicule et du dispositif de protection.
[Fig. 6] La figure 6 est une vue en perspective partielle du dispositif de protection.
[Fig. 7] La figure 7 est une vue du dispositif de protection selon une section transversale et verticale.
[Fig. 8] La figure 8 est une vue de côté du dispositif de protection.
[Fig. 9] La figure 9 est une première vue en perspective et en coupe d'une partie du véhicule comprenant le dispositif de protection.
[Fig. 10] La figure 10 est une deuxième vue en perspective et en coupe d'une partie du véhicule comprenant le dispositif de protection.
[Fig. 11] La figure 11 illustre la première vue en perspective de la figure 9 avec des flèches illustrant la transmission d'efforts consécutivement à un choc latéral.

Sur l'ensemble des figures et de la description, la gauche et la droite sont définies selon le point de vue d'un conducteur d'un véhicule. L'axe X désigne l'axe longitudinal du véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite. L'axe Z désigne l'axe perpendiculaire à l'axe X et à l'axe Y. L'axe Z est un axe vertical lorsque le véhicule repose sur un sol horizontal. L'axe Z est orienté de bas en haut. Les axes X, Y et Z forment un repère orthogonal. On considère dans tout le document que le véhicule considéré repose sur un sol horizontal.

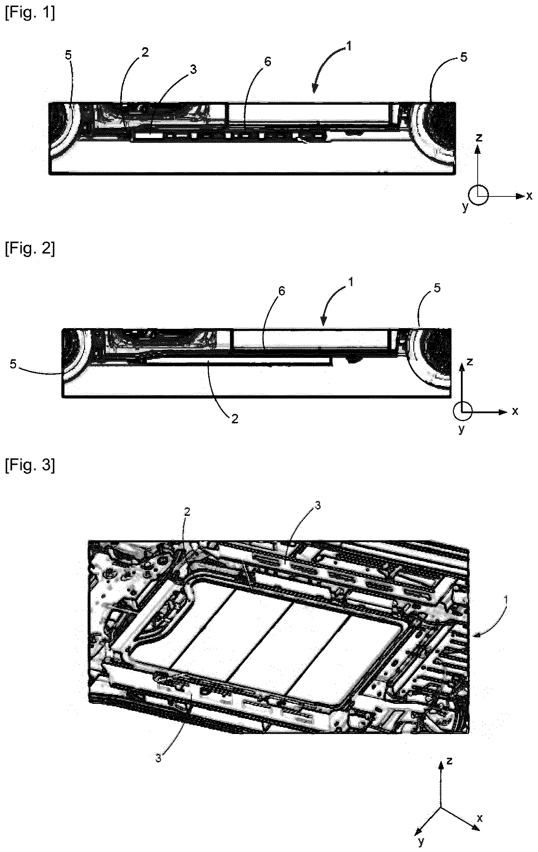

La figure 1 illustre partiellement un véhicule 1 automobile selon un mode de réalisation de l'invention. Selon le mode de réalisation illustré, le véhicule 1 est un véhicule utilitaire, notamment un véhicule apte à transporter du matériel et à effectuer des livraisons. En variante, le véhicule 1 pourrait être de toute autre nature. Notamment, il pourrait être par exemple un véhicule particulier, un camion ou un bus. Le véhicule 1 est un véhicule dit "électrique", c'est-à-dire un véhicule comprenant un moteur électrique et une batterie 2, dite batterie de traction. Le moteur électrique est apte à entraîner le véhicule ou à participer à son entraînement conjointement avec un autre moteur, notamment un moteur thermique. La batterie de traction 2 constitue une réserve d'énergie pour le moteur électrique. La batterie de traction n'est donc pas une batterie du véhicule simplement chargée d'alimenter en énergie différents périphériques du véhicule comme la batterie couramment dénommée "batterie 12 Volts". Bien que la batterie soit dénommée "batterie de traction", le véhicule peut être indifféremment entraîné en traction ou en propulsion. Par commodité, on utilisera dans la suite de la description le terme "batterie" pour désigner la batterie de traction. Comme visible sur la figure 3, la batterie 2 comprend une forme sensiblement rectangulaire et s'étend sous le véhicule 1 selon un plan longitudinal et transversal.

Le véhicule 1 est également équipé de deux dispositifs de protection 3 selon un mode de réalisation de l'invention. Les deux dispositifs de protection 3 s'étendent longitudinalement de part et d'autre de la batterie 2, le long des cotés longitudinaux de la batterie 2. Les deux dispositifs de protection 3 peuvent être symétriques l'un par rapport à l'autre ou bien être différents l'un de l'autre. Dans la suite de la description, on considère que les deux dispositifs sont sensiblement symétriques l'un par rapport à l'autre et on décrira uniquement le dispositif de protection gauche.

Le véhicule 1 comprend en outre une caisse 4 constituant une structure rigide du véhicule. La batterie 2 est fixée saillante sous la caisse 3 du véhicule 1. Sur la figure 2, on a masqué le dispositif de protection pour pouvoir visualiser la batterie 2. En l'absence des dispositifs de protection, la batterie 2 forme un point bas du véhicule (à l'exception des roues 5 qui sont bien sûr en contact avec le sol). Autrement dit, en l'absence des dispositifs de protection, la batterie 2 forme la garde au sol du véhicule. Le bavolet identifié par 6 sur les figures 1 et 2 désigne la partie inférieure de la caisse entre les roues avant et les roues arrières. Le point bas de la batterie 2 est donc plus bas que le point bas du bavolet 6. En remarque, le point bas de la batterie ou de tout autre élément mentionné dans cette description peut être constitué par un ensemble de points à la même hauteur ou par une surface horizontale de la batterie s'étendant à la même hauteur. En présence des dispositifs de protection 3, ce sont ces derniers qui forment le point bas du véhicule. Les dispositifs de protection 3 descendent donc plus bas que la batterie 2 selon l'axe vertical Z. Le point bas du dispositif de protection 3 peut avantageusement être plus bas que tout autre équipement du véhicule agencé sur la surface inférieure du véhicule.

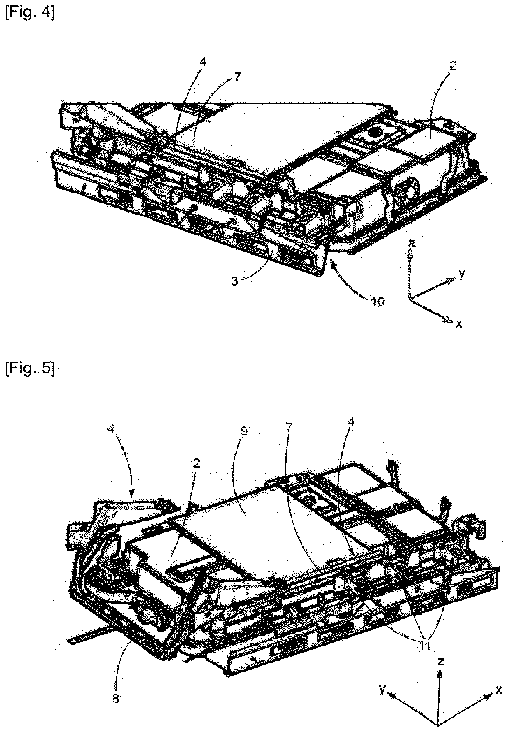

Le positionnement saillant vers le bas de la batterie peut être obtenu notamment lorsque la batterie 2 est assemblée à la caisse 4 par en dessous. En particulier, la caisse du véhicule comprend deux longerons 7 qui sont des éléments de caisse s'étendant longitudinalement de chaque côté de la caisse. L'écartement entre les deux longerons, c'est-à-dire la distance séparant les deux longerons 7 selon l'axe transversal du véhicule peut limiter une position davantage vers le haut de la batterie 2. Un tel longeron 7 est au moins partiellement visible sur les figures 4 et 5. Le point bas de chaque longeron 7 se situe donc au-dessus du point bas de la batterie 2.

Sur les figures 4 et 5, on a masqué au moins partiellement la caisse du véhicule pour pouvoir observer de dessus la batterie 2 et le longeron 7 gauche. Le dispositif de protection 3 gauche est intégré dans un système de protection 10 fixé au longeron 7 gauche. Le système de protection 10 comprend, outre le dispositif de protection 3, trois dispositifs d'absorption 11 de l'énergie d'un choc. Le dispositif de protection s'étend selon un axe X1, sensiblement parallèle à l'axe longitudinal X. Les dispositifs d'absorption 11 s'étendent transversalement entre le dispositif de protection 3 et le longeron 7. Le dispositif de protection 3 s'étend sur l'intégralité du côté gauche de la batterie. Il comprend donc une longueur voisine de la longueur de la batterie selon l'axe longitudinal X et de l'ordre de grandeur de l'empattement du véhicule 1. Le dispositif de protection s'étend parallèlement au côté gauche de la batterie à faible distance de la batterie 2 sans toutefois être en contact direct avec la batterie 2. Comme cela apparait sur la figure 5, le véhicule 1 comprend également un protecteur avant 8, indépendant, formant une barrière de protection de la batterie contre les chocs avant. Le protecteur avant 8 est également fixé à la caisse 4 du véhicule. Le véhicule comprend en outre une plaque d'entretoise 9 s'étendant dans un plan longitudinal et transversal au-dessus de la batterie. Cette plaque d'entretoise 9 est fixée au longerons 7.

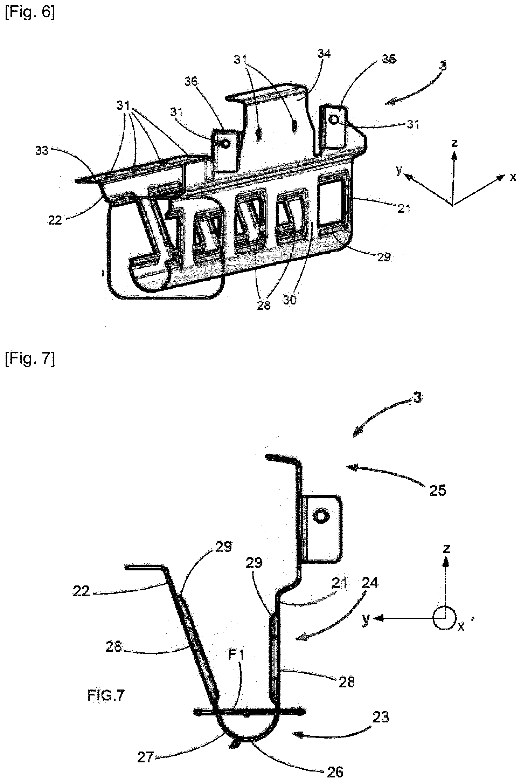

Les figures 6, 7 et 8 illustrent plus en détail le dispositif de protection 3. Le dispositif de protection 3 forme une barrière de protection latérale pour la batterie 2. Il peut être fait d'une pièce monobloc et métallique. Il peut être obtenu par un procédé de pliage et de découpe d'une feuille ou tôle métallique dont l'épaisseur est déterminée pour lui conférer la rigidité et la solidité souhaitée. Avantageusement, le dispositif de protection 3 peut également comprendre un revêtement pour le protéger contre la corrosion.

Selon une section perpendiculaire à l'axe X1, c'est-à-dire une section transversale et verticale, telle que notamment illustrée sur la figure 3, le dispositif de protection 3 comprend globalement la forme d'un "V". Une première branche 21 du V s'élève verticalement. Une deuxième branche 22 du V s'élève vers le haut et vers la batterie 2 (vers la droite en considérant le dispositif de protection gauche). Elle est donc inclinée par rapport à la batterie 2 ce qui permet de libérer un volume plus important entre la batterie et le dispositif de protection dans la partie inférieure du dispositif de protection. La batterie est donc plus facilement accessible pour un éventuel démontage. La première branche 21 est positionnée du côté extérieur du véhicule 1 (du côté gauche en considérant le dispositif de protection gauche). La deuxième branche 22 est positionnée du côté intérieur du véhicule 1 (du côté droit en considérant le dispositif de protection gauche). On peut décomposer le dispositif de protection 3 en une partie inférieure 23, une partie intermédiaire 24 et une partie supérieure 24.

La partie inférieure 23 inclue le point bas 26 du dispositif de protection. La partie inférieure 23 comprend sensiblement une forme en arc de cercle 27, pouvant par exemple s'étendre sur toute la longueur du dispositif de protection suivant l'axe longitudinal. La partie inférieure a globalement la forme d'un demi tube coupé dans le sens de la longueur selon un diamètre sensiblement horizontal. La partie inférieure 23 permet ainsi de relier la première branche 21 et à la deuxième branche 22 et comprend donc la pointe du V formé par le dispositif de protection. En variante, la partie inférieure pourrait non pas avoir exactement la forme d'un arc de cercle mais avoir une forme courbe reliant progressivement la première branche 21 à la deuxième branche 22, comme par exemple une forme de courbe sinusoïdale ou de courbe polynomiale. Avantageusement, la partie inférieure 23 ne comprend pas d'arrête ou de variation brutale de forme pouvant constituer un point d'accroche avec un obstacle.

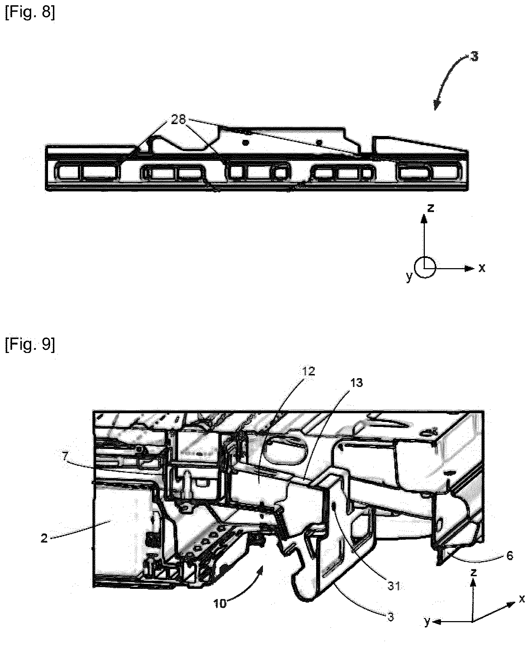

La partie intermédiaire 24 s'étend dans la première branche 21 et dans la deuxième branche 22 entre la partie inférieure 23 et la partie supérieure 25. Chacune des deux branches 21, 22 comprend une série d'ouvertures 28 réparties sur toute la longueur du dispositif de protection 3. Ces ouvertures 28, ou fenêtres, sont traversantes et ont une forme sensiblement rectangulaire avec des congés reliant les côtés du rectangle. Les ouvertures peuvent avoir une largeur (suivant l'axe longitudinal X) sensiblement identiques et une hauteur (sensiblement suivant l'axe vertical Z) variable. Plus précisément la série d'ouvertures 28 comprend une alternance de premières ouvertures et de deuxièmes ouvertures. Les premières ouvertures comprennent une hauteur plus importante que les deuxièmes ouvertures. Chaque deuxième ouverture est encadrée par deux premières ouvertures. Les premières ouvertures comprennent une surface strictement supérieure à la surface des deuxièmes ouvertures, notamment le rapport de la surface des premières ouvertures sur la surface des deuxièmes ouvertures est compris entre 1.1 et 1.5. En variante, la forme des ouvertures pourrait être différente, par exemple une forme circulaire ou triangulaire. Le dispositif de protection pourrait comprendre plus de deux types d'ouvertures différentes et leur taille pourrait varier non seulement selon leur hauteur mais également selon leur longueur. Comme cela apparait sur la figure 8, les ouvertures 28 présentes sur la première branche 21 sont décalées longitudinalement par rapport aux ouvertures 28 présentes sur la deuxième branche 22. Ainsi, on limite l'exposition de la batterie à des projectiles ou objets en incidence transversale vers la batterie puisque ceux-ci peuvent être, si non bloqués par les montants séparant les ouvertures de la première branche, bloqués par les montants séparant les ouvertures de la deuxième branche.

Comme visible sur les figures 6 et 7, les ouvertures 28 sont réalisées chacune dans un renfoncement 29 vers l'intérieur du V, c'est-à-dire vers l'intérieur du dispositif de protection. Les bords de chaque ouverture sont donc reliés suivant une pente inclinée aux surfaces planes 30 formant la première branche et la deuxième branche. Autrement dit les bords des ouvertures 28 ces renfoncements 29 s'apparentent à des chanfreins aux bords de chaque ouverture 28. Les bords des ouvertures 28 sont en retrait vers l'intérieur par rapport aux surfaces planes 30

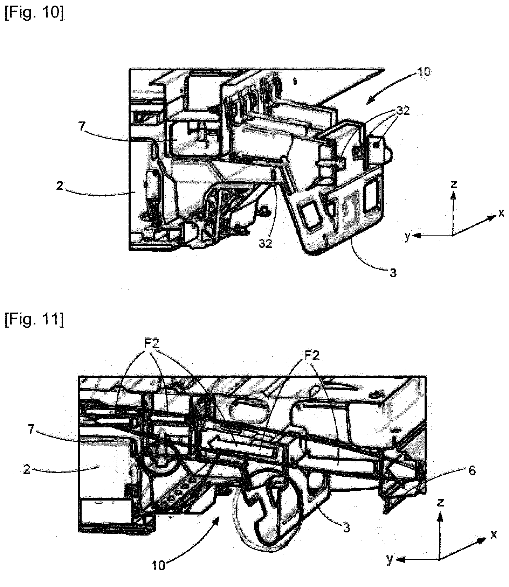

La partie supérieure 25 du dispositif de protection 3 comprend une série de trous de fixations 31 aptes à coopérer avec des vis de fixation 32 (visibles sur la figure 10) pour la fixation du dispositif de fixation à la caisse 4 du véhicule. Selon le mode de réalisation illustré, le dispositif de protection 3 comprend huit trous de fixation 31 mais en variante ce nombre pourrait être différent. Selon une autre variante, le dispositif de protection pourrait être fixé à la caisse 4 par des moyens de fixation équivalents comme par exemple des rivets. Avantageusement le moyen de fixation utilisé est amovible de sorte à pouvoir changer le dispositif de protection facilement.

La partie supérieure 25 comprend en outre quatre brides de fixation 33, 34, 35, 36. Une première bride de fixation 33 est munie de quatre trous de fixation 31 répartis longitudinalement. La première bride de fixation 33 s'étend dans un premier plan XY sensiblement parallèle à l'axe longitudinal et à l'axe transversal. Une deuxième bride de fixation 34 est munie de deux trous de fixation 31 agencés longitudinalement. La deuxième bride de fixation 34 s'étend dans un deuxième plan XZ sensiblement parallèle à l'axe longitudinal et à l'axe vertical. Une troisième bride de fixation 35 est munie d'un seul trou de fixation 31. La troisième bride de fixation 35 s'étend dans un troisième plan YZ sensiblement parallèle à l'axe vertical et à l'axe transversal. La quatrième bride de fixation 36 fait face à la troisième bride de fixation 35. Elle est munie d'un seul trou de fixation 31 et s'étend dans le troisième plan YZ. Le premier plan XY, le deuxième plan XZ et le troisième plan YZ sont sensiblement perpendiculaires entre eux. Ainsi la fixation du dispositif de protection est robuste pour supporter des efforts orientés selon n'importe quelle direction X, Y ou Z.

Les trous de fixation 31 sont agencés de sorte que les vis de fixation 32 demeurent directement accessibles lorsque le dispositif de protection est fixé à la caisse 4 du véhicule. Notamment les vis de fixation 32 coopérant avec les brides 34, 35, 36 sont accessibles latéralement et sont masquées uniquement par le bavolet 6. Un dégagement latéral suffisant entre le bavolet 6 et le dispositif de protection 3 permet d'accéder aux vis de fixation 32 sans difficulté. Les vis de fixation 32 coopérant avec la bride 33 sont accessible par le dessous du véhicule. Ces vis de fixation sont directement accessibles lorsque le véhicule est positionné sur un pont de levage. De plus, il n'est pas utile de retirer un autre équipement du véhicule pour y accéder. Aucun branchement ni aucune autre pièce n'est fixé sur le dispositif de protection 3.

Comme mentionné précédemment, le dispositif de protection 3 gauche est intégré dans un système de protection 10 comprenant également trois dispositifs d'absorption 11. Ce système de protection 10 est notamment illustré sur les figures 9, 10 et 11. Les dispositifs d'absorption 11 comprennent un boîtier 12 formant une partie femelle et un axe 13 formant une partie mâle. Lorsqu'un effort orienté transversalement est appliqué sur l'axe 13, celui-ci peut s'avancer dans le boîtier 12 tout en provoquant une déformation du boîtier 12 et/ou de l'axe 13. Ainsi, le dispositif est apte à absorber au moins une partie de l'énergie d'un choc transversal par ses propres déformations. Un tel dispositif 11 peut encore être dénommé selon l'anglicisme "crash box". Le dispositif de protection 3 est fixé au longeron 7 par l'intermédiaire des trois dispositifs d'absorption 11. En variante, le nombre de dispositifs d'absorption 11 pourrait être quelconque. Le boîtier 12 peut être fixé au longeron 7 tandis que l'axe 13 peut être fixé au dispositif de protection 3.

Pour assembler le véhicule 1, on peut procéder aux étapes suivantes. Tout d'abord, on assemble la batterie 2 à la caisse 4 en l'apportant par en dessous. La batterie 2 peut être fixée à la caisse 4 avec des vis de fixation. La fixation sous caisse de la batterie 2 permet un montage aisé de la batterie. Lorsque la batterie du véhicule est vide, la batterie peut être facilement démontée et remplacée par une batterie équivalent chargée. On évite ainsi d'attendre que la batterie vide se recharge. Les deux dispositifs de protection peuvent être fixés à la caisse 4, indépendamment de la fixation de la batterie 2, grâce aux vis de fixation 32.

Lors de l'utilisation du véhicule 1, lorsque le conducteur du véhicule effectue une manœuvre comme par exemple un virage serré, un créneau pour se garer, un demi-tour, ou encore une marche arrière, un obstacle présent sur la chaussée peut venir heurter le dispositif de protection 3. Cet obstacle peut être par exemple un trottoir, une borne, un plot ou un terre-plein. Tout d'abord le contact de l'obstacle contre le dispositif de protection produira un bruit susceptible d'alerter le conducteur sur la présence d'un obstacle. Ensuite, si le conducteur poursuit sa manœuvre et que l'objet poursuit sa course en direction du dispositif de protection, celui-ci pourra se déformer pour absorber au moins une partie de l'énergie du choc. Grace à la forme en arc de cercle 27 de la partie inférieure 23, le dispositif de protection pourra se déformer jusqu'à ce que l'obstacle vienne sous le dispositif de protection. En plus du bruit généré par le contact, les frottements importants entre l'obstacle et le dispositif de protection seront perçus par le conducteur ce qui lui de prendre conscience de la présence de l'obstacle. Grâce à la forme en arc de cercle de la partie inférieure 21, le conducteur pourra facilement se dégager de l'obstacle. Il ne risque donc pas d'immobiliser son véhicule contre l'obstacle. La partie inférieure 21 du dispositif de protection est apte à se déformer selon un mouvement de va et vient illustré par une flèche F1 sur la figure 7. Comme le dispositif de protection 3 est déformable, les roues du véhicule restent en contact avec le sol même lorsque l'obstacle passe sous le dispositif de protection. Le véhicule conserve donc une motricité suffisante pour se dégager de l'obstacle.

De plus comme les ouvertures 28 sont réalisées dans les renfoncements 29 vers l'intérieur du dispositif de protection, on limite le risque qu'un obstacle s'agrippe dans l'une des ouvertures 28 si le dispositif de protection frôle cet obstacle. Les renfoncements 29 permettent en outre d'accroitre la rigidité du dispositif de protection.

En cas de collision latérale d'un obstacle contre le véhicule. Les efforts transmis par la collision sont représentés par cinq flèches indiquées par F2 sur la figure 11. L'effort est transmis tout d'abord depuis le bavolet 6 jusqu'au dispositif de protection 3 puis du dispositif de protection jusqu'au longeron 7 par l'intermédiaire des dispositif d'absorption 11. Les déformations successives du bavolet 6, du dispositif de protection 3 du dispositif d'absorption 11 permettent d'atténuer l'énergie transmise au longeron 7. Ainsi la déformation du longeron 7 est minimale et les risques d'endommager la batterie sont réduits.

Le dispositif de protection pourra donc se retrouver irréversiblement déformé suite à sa collision avec un obstacle. Le propriétaire de la voiture pourra facilement juger de l'état d'usure du dispositif de protection par une inspection visuelle puisque le dispositif de protection est bien visible de l'extérieur. Il pourra décider de remplacer le dispositif de protection lorsque celui-ci sera trop déformé ou s'il souhaite améliorer l'esthétique de son véhicule. Le démontage d'un dispositif de protection ne requiert pas le démontage préalable d'autres éléments du véhicule puisque les vis de fixation 32 sont directement accessibles. Notamment, le démontage d'un dispositif de protection ne requiert pas le démontage préalable de la batterie 2. Le remplacement du dispositif de protection usagé par un dispositif de protection neuf est aisé car le dispositif de protection est fixé à la caisse uniquement par des vis, et ces vis demeurent facilement accessibles. Le démontage et le remontage d'un dispositif de protection ne requiert aucun outil spécifique.

Les ouvertures 28 facilitent la déformation du dispositif de protection en cas de choc. Cette déformation permet d'absorber au moins une partie de l'énergie du choc qui ainsi n'est pas transmis à la batterie 2. La rigidité du dispositif de protection 28 peut être facilement ajustée en modifiant le nombre ou la taille des ouvertures 28. La taille et la forme des ouvertures permet d'anticiper le mode de déformation du dispositif de protection en cas de choc. L'alternance de premières et de deuxièmes ouvertures permet au dispositif de protection de se déformer tout en atténuant les efforts transmis à la caisse. De plus, les ouvertures 28 permettent d'alléger le dispositif de protection et facilitent l'évacuation de liquides ou de particules qui, à défaut, pourraient s'accumuler entre les deux branches 21, 22. Avantageusement les extrémités avant et arrière du dispositif de protection 3 sont libres de sorte qu'un éventuel liquide contenu dans la partie inférieure 21 sous le niveau des ouvertures 28 peut aussi être évacué. Le flux d'air produit par le déplacement du véhicule peut faciliter l'évacuation du liquide ou des particules vers l'arrière.

L'invention pourra également être utilisée pour protéger des chocs ou des rayures tout organe monté saillant sous caisse, y compris, pour un véhicule équipé d'un moteur à combustion à la place du moteur électrique.

## Revendications

1. Dispositif de protection (3) pour protéger un organe monté saillant sous une caisse (4) d'un véhicule (1) automobile, notamment pour protéger une batterie (2) de traction montée saillante sous une caisse (4) d'un véhicule (1) électrique, **caractérisé en ce que** le dispositif de protection (3) s'étend le long d'un axe (X1) destiné à être orienté longitudinalement par rapport au véhicule et le long d'un côté dudit organe, le dispositif de protection (3) étant destiné à être fixé à une caisse (4) du véhicule (1) de sorte qu'un point bas (26) du dispositif de protection (3) soit plus bas qu'un point bas dudit organe, le dispositif de protection (3) comprenant une partie (23) incluant le point bas (26) du dispositif de protection, ladite partie (23) comprenant sensiblement une forme d'arc de cercle (27) selon une section perpendiculaire audit axe (X1) du dispositif de protection (3).

2. Dispositif de protection (3) selon la revendication précédente, **caractérisé en ce qu'**il est apte à se déformer consécutivement à un choc contre un obstacle.

3. Dispositif de protection (3) selon l'une des revendications précédentes, **caractérisé en ce qu'**il comprend une série d'ouvertures (28) réparties le long de l'axe (X1).

4. Dispositif de protection (3) selon la revendication précédente, **caractérisé en ce que** la série d'ouvertures (28) comprend une alternances de premières ouvertures et de deuxièmes ouvertures, les premières ouvertures comprenant une surface strictement supérieure à la surface des deuxièmes ouvertures, notamment le rapport de la surface des premières ouvertures sur la surface des deuxièmes ouvertures étant compris entre 1.1 et 1.5 .

5. Dispositif de protection (3) selon l'une des revendications 3 ou 4, **caractérisé en ce que** les ouvertures (28) sont réalisées dans des renfoncements (29) vers l'intérieur du dispositif de protection (3).

6. Dispositif de protection (3) selon l'une des revendications précédentes, **caractérisé en ce qu'**il comprend un profil en forme de V.

7. Dispositif de protection (3) selon l'une des revendications précédentes, **caractérisé en ce qu'**il comprend une série de trous de fixation (31) aptes à coopérer avec des moyens de fixation (32) pour la fixation du dispositif de protection (3) à la caisse (4) du véhicule (1), les trous de fixation (31) étant agencés de sorte que les moyens de fixation (32) demeurent directement accessibles lorsque le dispositif de protection (3) est fixé à la caisse (4) du véhicule (1).

8. Dispositif de protection (3) selon l'une des revendications précédentes, **caractérisé en ce qu'**il comprend :
- une première bride de fixation (33) munie d'au moins un trou de fixation (31), la première bride de fixation (33) s'étendant dans un premier plan (XY),
- une deuxième bride de fixation (34) munie d'au moins un trou de fixation (31), la deuxième bride de fixation (34) s'étendant dans un deuxième plan (XZ),
- une troisième bride de fixation (35, 36) munie d'au moins un trou de fixation (31), la troisième bride de fixation (35, 36) s'étendant dans un troisième plan (YZ),
le premier plan (XY), le deuxième plan (XZ) et le troisième plan (YZ) étant sensiblement perpendiculaires entre eux.

9. Dispositif de protection (3) selon l'une des revendications précédentes, **caractérisé en ce qu'**il est destiné à être fixé à un élément de caisse longitudinal du véhicule, notamment à un longeron (7) de la caisse (4) du véhicule (1).

10. Système de protection (10) pour protéger un organe fixé sous une caisse d'un véhicule automobile, **caractérisé en ce qu'**il comprend un dispositif de protection (3) selon l'une des revendications précédentes et au moins un dispositif d'absorption (11) de l'énergie d'un choc, l'au moins un dispositif d'absorption (11) étant agencé entre le dispositif de protection (3) et un élément de caisse longitudinal du véhicule, notamment un longeron (7) de la caisse (4) du véhicule (1), pour absorber l'énergie de chocs transversaux contre le dispositif de protection (3).

11. Véhicule (1) automobile électrique, notamment de type utilitaire, **caractérisé en ce qu'**il comprend une caisse, une batterie (2) de traction montée saillante sous la caisse, et au moins un dispositif de protection (3) selon l'une des revendications 1 à 9 et/ou un système de protection (10) selon la revendication précédente, le dispositif de protection (3) étant fixé le long d'un côté longitudinal de la batterie (2) de traction, notamment le véhicule (1) comprenant deux dispositifs de protection (3) selon l'une des revendications 1 à 9 et/ou deux systèmes de protection (10) selon la revendication précédente, les deux dispositifs de protection (3) étant fixés latéralement de part et d'autre de la batterie (2) de traction.

## Patentansprüche

1. Schutzvorrichtung (3) zum Schützen eines unterhalb einer Karosserie (4) eines Kraftfahrzeugs (1) hervorstehend angeordneten Bauteils, insbesondere zum Schützen einer unterhalb einer Karosserie (4) hervorstehend angeordneten Antriebsbatterie (2) eines Elektrofahrzeugs (1), **dadurch gekennzeichnet, dass** sich die Schutzvorrichtung (3) entlang einer Achse (X1) erstreckt, die dazu bestimmt ist, in Längsrichtung in Bezug auf das Fahrzeug und entlang einer Seite des Bauteils ausgerichtet zu werden, wobei die Schutzvorrichtung (3) dazu bestimmt ist, an einer Karosserie (4) des Fahrzeugs (1) befestigt zu werden, so dass ein unterer Punkt (26) der Schutzvorrichtung (3) tiefer liegt als ein unterer Punkt des Bauteils, wobei die Schutzvorrichtung (3) einen Teil (23) aufweist, der den unteren Punkt (26) der Schutzvorrichtung einschließt, wobei der Teil (23) im Wesentlichen die Form eines Kreisbogens (27) in einem Schnitt senkrecht zu der Achse (X1) der Schutzvorrichtung (3) aufweist.

2. Schutzvorrichtung (3) nach dem vorhergehenden Anspruch, **dadurch gekennzeichnet, dass** sie sich nach einem Aufprall auf ein Hindernis verformen kann.

3. Schutzvorrichtung (3) nach einem der vorhergehenden Ansprüche, **dadurch gekennzeichnet, dass** sie eine Reihe von Öffnungen (28) aufweist, die entlang der Achse (X1)

4. Schutzvorrichtung (3) nach dem vorhergehenden Anspruch, **dadurch gekennzeichnet, dass** die Reihe von Öffnungen (28) abwechselnd erste Öffnungen und zweite Öffnungen aufweist, wobei die ersten Öffnungen eine Oberfläche aufweisen, die deutlich größer ist als die Oberfläche der zweiten Öffnungen, insbesondere das Verhältnis der Oberfläche der ersten Öffnungen zu der Oberfläche der zweiten Öffnungen zwischen 1,1 und 1,5 liegt.

5. Schutzvorrichtung (3) nach einem der Ansprüche 3 oder 4, **dadurch gekennzeichnet, dass** die Öffnungen (28) in Vertiefungen (29) zum Inneren der Schutzvorrichtung (3) hin ausgebildet sind.

6. Schutzvorrichtung (3) nach einem der vorhergehenden Ansprüche, **dadurch gekennzeichnet, dass** sie ein V-förmiges Profil aufweist.

7. Schutzvorrichtung (3) nach einem der vorhergehenden Ansprüche, **dadurch gekennzeichnet, dass** sie eine Reihe von Befestigungslöchern (31) aufweist, die mit Befestigungsmitteln (32) zur Befestigung der Schutzvorrichtung (3) an der Karosserie (4) des Fahrzeugs (1) zusammenwirken können, wobei die Befestigungslöcher (31) so angeordnet sind, dass die Befestigungsmittel (32) direkt zugänglich bleiben, wenn die Schutzvorrichtung (3) an der Karosserie (4) des Fahrzeugs (1) befestigt ist.

8. Schutzvorrichtung (3) nach einem der vorhergehenden Ansprüche, **dadurch gekennzeichnet, dass** sie aufweist:
- einen ersten Befestigungsflansch (33), der mit mindestens einem Befestigungsloch (31) versehen ist, wobei sich der erste Befestigungsflansch (33) in einer ersten Ebene (XY) erstreckt,
- einen zweiten Befestigungsflansch (34), der mit mindestens einem Befestigungsloch (31) versehen ist, wobei sich der zweite Befestigungsflansch (34) in einer zweiten Ebene (XZ) erstreckt,
- einen dritten Befestigungsflansch (35, 36), der mit mindestens einem Befestigungsloch (31) versehen ist, wobei sich der dritte Befestigungsflansch (35, 36) in einer dritten Ebene (YZ) erstreckt,
wobei die erste Ebene (XY), die zweite Ebene (XZ) und die dritte Ebene (YZ) im Wesentlichen senkrecht zueinander sind.

9. Schutzvorrichtung (3) nach einem der vorhergehenden Ansprüche, **dadurch gekennzeichnet, dass** sie zum Befestigen an einem länglichen Karosserieteil des Fahrzeugs, insbesondere an einem Längsträger (7) der Karosserie (4) des Fahrzeugs (1), bestimmt ist.

10. Schutzsystem (10) zum Schützen eines unterhalb einer Karosserie eines Kraftfahrzeugs befestigten Bauteils, **dadurch gekennzeichnet, dass** es eine Schutzvorrichtung (3) nach einem der vorhergehenden Ansprüche und mindestens eine Vorrichtung zur Aufnahme (11) der Aufprallenergie aufweist, wobei die mindestens eine Aufnahmevorrichtung (11) zwischen der Schutzvorrichtung (3) und einem länglichen Karosserieteil des Fahrzeugs, insbesondere einem Längsträger (7) der Karosserie (4) des Fahrzeugs (1), angeordnet ist, um die Energie aus einem Queraufprall gegen die Schutzvorrichtung (3) aufzunehmen.

11. Elektrokraftfahrzeug (1), insbesondere vom Typ Nutzfahrzeug, **dadurch gekennzeichnet, dass** es eine Karosserie, eine unterhalb der Karosserie hervorstehend angeordnete Antriebsbatterie (2) und mindestens eine Schutzvorrichtung (3) nach einem der Ansprüche 1 bis 9 und/oder ein Schutzsystem (10) nach dem vorhergehenden Anspruch aufweist, wobei die Schutzvorrichtung (3) entlang einer Längsseite der Antriebsbatterie (2) befestigt ist, wobei das Fahrzeug (1) insbesondere zwei Schutzvorrichtungen (3) nach einem der Ansprüche 1 bis 9 und/oder zwei Schutzsysteme (10) nach dem vorhergehenden Anspruch aufweist, wobei die beiden Schutzvorrichtungen (3) seitlich beiderseits der Antriebsbatterie (2) befestigt sind.

## Claims

1. Protection device (3) for protecting a member mounted projecting under a body (4) of a motor vehicle (1), notably for protecting a traction battery (2) mounted projecting under a body (4) of an electric vehicle (1), **characterized in that** the protection device (3) extends along an axis (X1) intended to be oriented longitudinally with respect to the vehicle and along one side of said member, the protection device (3) being intended to be fastened to a body (4) of the vehicle (1) such that a low point (26) of the protection device (3) is lower than a low point of said member, the protection device (3) comprising a part (23) including the low point (26) of the protection device, said part (23) comprising substantially the shape of a circular arc (27) in a cross-section perpendicular to said axis (X1) of the protection device (3).

2. Protection device (3) according to the preceding claim, **characterized in that** it can be deformed following an impact against an obstacle.

3. Protection device (3) according to one of the preceding claims, **characterized in that** it comprises a series of openings (28) distributed along the axis (X1).

4. Protection device (3) according to the preceding claim, **characterized in that** the series of openings (28) comprises alternating first openings and second openings, the first openings comprising an area strictly greater than the area of the second openings, the ratio of the area of the first openings to the area of the second openings notably being between 1.1 and 1.5.

5. Protection device (3) according to either of Claims 3 and 4, **characterized in that** the openings (28) are formed in recesses (29) extending into the protection device (3).

6. Protection device (3) according to one of the preceding claims, **characterized in that** it comprises a V-shaped profile.

7. Protection device (3) according to one of the preceding claims, **characterized in that** it comprises a series of fastening holes (31) able to cooperate with fastening means (32) for fastening the protection device (3) to the body (4) of the vehicle (1), the fastening holes (31) being arranged so that the fastening means (32) remain directly accessible once the protection device (3) is fastened to the body (4) of the vehicle (1).

8. Protection device (3) according to one of the preceding claims, **characterized in that** it comprises:
- a first fastening flange (33) provided with at least one fastening hole (31), the first fastening flange (33) extending in a first plane (XY),
- a second fastening flange (34) provided with at least one fastening hole (31), the second fastening flange (34) extending in a second plane (XZ),
- a third fastening flange (35, 36) provided with at least one fastening hole (31), the third fastening flange (35, 36) extending in a third plane (YZ),
the first plane (XY), the second plane (XZ) and the third plane (YZ) being substantially perpendicular to each other.

9. Protection device (3) according to one of the preceding claims, **characterized in that** it is intended to be fastened to a longitudinal body element of the vehicle, notably to a side rail (7) of the body (4) of the vehicle (1).

10. Protection system (10) for protecting a member fastened under a body of a motor vehicle, **characterized in that** it comprises a protection device (3) according to one of the preceding claims and at least one device (11) for absorbing the energy of an impact, the at least one absorption device (11) being arranged between the protection device (3) and a longitudinal body element of the vehicle, notably a side rail (7) of the body (4) of the vehicle (1), for absorbing the energy of transverse impacts against the protection device (3).

11. Electric motor vehicle (1), notably a commercial vehicle, **characterized in that** it comprises a body, a traction battery (2) mounted projecting under the body, and at least one protection device (3) according to one of Claims 1 to 9 and/or a protection system (10) according to the preceding claim, the protection device (3) being fastened along a longitudinal side of the traction battery (2), the vehicle (1) notably comprising two protection devices (3) according to one of Claims 1 to 9 and/or two protection systems (10) according to the preceding claim, the two protection devices (3) being fastened laterally on the two sides of the traction battery (2).
